**Europäisches Patentamt**

**European Patent Office**

**Office européen des brevets**

(19)

(11) Veröffentlichungsnummer: **0 351 805**
**A2**

# (12) EUROPÄISCHE PATENTANMELDUNG

(21) Anmeldenummer: **89113198.9**

(22) Anmeldetag: **19.07.89**

(51) Int. Cl.4: **C04B 35/58**

(30) Priorität: **21.07.88 DE 3824835**

(43) Veröffentlichungstag der Anmeldung:
**24.01.90 Patentblatt 90/04**

(84) Benannte Vertragsstaaten:
**AT BE CH DE FR GB IT LI**

(71) Anmelder: **Elektroschmelzwerk Kempten GmbH**
**Herzog-Wilhelm-Strasse 16**
**D-8000 München 2(DE)**

(72) Erfinder: **Thaler, Hubert, Dipl.-Ing. (FH)**
**Duracher Strasse 38**
**D-8960 Kempten(DE)**
Erfinder: **Lange, Dietrich, Dr. Dipl.-Ing.**
**Beuthener Weg 7**
**D-8960 Kempten(DE)**
Erfinder: **Schwetz, Karl Alexander, Dr. Dipl.-Ing.**
**Bergstrasse 4**
**D-8961 Sulzberg(DE)**

(54) **Verfahren zur Herstellung von Grünkörpern durch Formgebung von sinterfähigen keramischen Massen auf Basis von Siliciumnitrid.**

(57) Gegenstand der Erfindung ist ein Verfahren zur Herstellung von Grünkörpern nach dem Schlickerguß-, Spritzguß- oder Strangpreßverfahren aus sinterfähigen Massen auf Basis von Siliciumnitrid, gegebenenfalls Aluminiumnitrid und/oder Aluminiumoxid und andere Oxide als Sinterhilfsmittel enthaltenden Ausgangspulvergemischen. Als Dispersions- und Bindemittel wird ein Magnesiumchloridhydrat im Gemisch mit Magnesiumoxid und Wasser verwendet und die Massen werden nach der Formgebung bei Temperaturen von $30°$ bis $60°$ C ausgehärtet. Zusätzlich können keramische Fasern, wie Siliciumcarbid als Füllstoffe mitverarbeitet werden. Die so erzeugten Grünkörper sind ausreichend standfest, sodaß sie mechanisch bearbeitet werden können.

EP 0 351 805 A2

## Verfahren zur Herstellung von Grünkörpern durch Formgebung von sinterfähigen keramischen Massen auf Basis von Siliciumnitrid

Polykristalline Formkörper auf Siliciumnitridbasis, die aus feinteiligem Siliciumnitrid, gegebenenfalls Aluminiumnitrid und/oder Aluminiumoxid und andere Oxide enthaltenden Ausgangspulvern durch Sinterung mit oder ohne Druckanwendung hergestellt werden können, sind seit langem bekannt. Aufgrund ihrer Eigenschaften, wie hohe Festigkeit bei Raumtemperatur, hohe Bruchzähigkeit, geringe thermische Ausdehnung und gutes Verschleißverhalten können sie auf vielen Anwendungsgebieten eingesetzt werden.

Wegen der begrenzten Formgebungsmöglichkeiten beim konventionellen Heißpressen werden für die Herstellung von Teilen mit komplizierter Form drucklose Sinterverfahren bevorzugt, bei welchen die Ausgangspulver unter Bildung von Grünkörpern der gewünschten Endform kompaktiert werden müssen, bevor sie durch Erhitzen auf die hierzu erforderlichen Temperaturen gesintert werden können.

Unter den bekannten Formgebungsverfahren zur Herstellung von Grünkörpern in Form von beispielsweise dünnen Platten, Stäben, dünnwandigen Tiegeln oder Rohren haben sich insbesondere Schlickerguß-, Strangpreß- und Spritzgußverfahren bewährt. Von entscheidender Bedeutung ist hierbei, daß Grünkörper von ausreichender Standfestigkeit erzeugt werden, damit sie vor der Sinterung mechanisch bearbeitet werden können, denn eine Bearbeitung nach der Sinterung ist aufgrund der Härte des gesinterten Materials auf Siliciumnitridbasis sehr aufwendig und nur mit Diamantwerkzeugen möglich.

Ein Hinweis für das Schlickergießen von keramischen Werkstoffen auf Siliciumnitridbasis findet sich in der GB-A-10 52 590. Hier wurden ausschließlich organische Lösungsmittel als flüssige Dispersionsmedien verwendet, in welchen das als Entflockungsmittel (deflocculant) eingesetzte polymere Cyclopentadien gut löslich ist. In den Beispielen wurden jedoch für den Einsatz von Siliciumnitridpulver mit Xylol als Dispersionsmedium und anschließendem Sintern keine Angaben über erzielte Sinterdichten gemacht. Außerdem wurde darauf hingewiesen, daß es bei Verwendung von Wasser als Dispersionsmedium praktisch unmöglich war, Gießkörper mit befriedigenden Eigenschaften zu erhalten aufgrund der Tatsache, daß die meisten der keramischen Materialien Verunreinigungen enthalten, die mit Wasser unter Bildung von Nebenprodukten reagieren, welche den physikalischen Zusammenhalt der resultierenden Grünkörper störend beeinflussen.

Ein Hinweis für das Spritzgießen von keramischen Pulvern auf Siliciumnitridbasis, die bis zu 30 Gew.-% Yttrium - oder Verbindungen der Lanthaniden enthalten, neben im Rohmaterial vorhandenen Spurenmengen an Fe, Ca, Mg oder deren Verbindungen, die zusammen mit einem organischen Bindemittel unter Bildung von Grünkörpern verarbeitet werden, findet sich in der US-A-4 296 065.

Ein weiterer Hinweis für das mögliche Schlickergießen von keramischen Pulvern auf Sialonbasis, wie $Si_3N_4$, AlN und/oder $Al_2O_3$, zusammen mit Sinterhilfsmitteln, wie $Y_2O_3$ oder Oxiden der Lanthaniden, bei welchen eine Dispersion mit einem Feststoffgehalt von 50 - 70 Gew.-% in Wasser als vorteilhaft empfohlen wird, ist der US-A-4 184 884 zu entnehmen.

Inzwischen hat sich allgemein die Auffassung durchgesetzt, daß Erfolg oder Mißerfolg sowohl beim Schlickerguß-, als auch beim Spritzgußverfahren weitgehend von der Art des verwendeten organischen Bindemittels abhängen.

Mit organischen Bindemitteln kann zwar ein guter Zusammenhalt der einzelnen Pulverteilchen erreicht werden, als temporäre Bindemittel müssen diese jedoch wieder entfernt werden, wodurch bereits vor oder spätestens während des eigentlichen Sintervorgangs Fehlstellen oder Hohlräume im Sinterkörper entstehen, durch welche Riß- oder Bruchstellen vorprogrammiert sind. Mit Wasser als Binde- oder Dispersionsmittel allein besteht hingegen bei Keramikpulvern auf Siliciumnitrid- und/oder Aluminiumnitridbasis die Gefahr, daß diese damit unter Zersetzung reagieren (vgl. DE-C-35 25 752).

Schlickergußmassen aus Siliciumnitridpulver und oxidischen Sinterhilfsmitteln auf Wasserbasis und die mögliche Beeinflussung durch anorganische Zusätze wurden daher ebenfalls bereits untersucht. Dabei wurden Gründichten von etwa 50 % TD erreicht (vgl. E.M. Rabinovich et al., J. Mater. Sci. 1982, 17(2), S. 323 - 328; ref. in C.A. Vol. 96, 1982, No. 204 230 s und M. Persson et al., J. Mater. Sci. Monogr. 1983, 16 (Ceram. Powders), S. 735 - 742; ref. in C.A. Vol. 99, 1983, No. 75 586 y).

Bei Untersuchungen über den möglichen Einfluß von Sinterhilfsmitteln auf die Schlicker wurde festgestellt, daß nach Zugabe von Magnesiumverbindungen (MgO oder Mg $(HCO_3)_2$), die Viskosität beträchtlich anstieg. Um eine gießfähige Suspension zu erhalten, war eine Verdünnung notwendig, was dann zu Grünkörpern von nur 35 bis 40 % TD führte (vgl. W.J.A.M. Hartmann et al., J. Phys. Colloq. 1986, S. C1-79 - C1-83; ref. in C.A. Vol. 104, 1986, No. 191 475 g).

Ferner ist bekannt, anstelle temporärer organischer Bindemittel solche zu verwenden, die unter Bildung einer temporären Bindung hydrolysierbar oder zersetzbar sind, welche dann beim Brennvorgang nicht

EP 0 351 805 A2

entfernt, sondern in eine refraktäre Oxidbindung umgewandelt werden kann. Als Beispiele für derartige Bindemittel wurden insbesondere Kieselsäurealkylester genannt, die beim Brennvorgang eine SiO$_2$-Bindung bilden können, aber auch organische Aluminiumverbindungen bzw. Magnesiumoxychlorid oder Magnesiumoxysulfat, die eine Aluminiumoxid- bzw. Magnesiumoxidbindung bilden können, wurden erwähnt (vgl. GB-A-10 54 631). Wie aus den Beispielen ersichtlich, wurden jedoch beim Vergießen einer Mischung aus Si$_3$N$_4$-Pulver und Orthokieselsäureethylester in wäßriger Ethanollösung und anschließendem Brennen der Grünkörper bei Temperaturen von bis zu 1350°C nur sehr poröse Endprodukte erhalten mit einer Porosität von 44 %, bzw. 32 %, das entspricht etwa 56 - 68 % TD. Die unter den angegebenen Bedingungen erwartete Bildung einer refraktären Oxidbindung allein war demnach nicht ausreichend, um Siliciumnitridsinterkörper mit hoher Enddichte zu erhalten.

Dem Stand der Technik ist zu entnehmen, daß für die Herstellung keramischer Massen auf Siliciumnitridbasis, die zur Formgebung nach dem Schlickerguß-, Spritzguß- oder Strangpreßverfahren verarbeitet werden sollen, organische Bindemittel und/oder organische Dispersionsmittel am besten geeignet sind, da hierdurch ein relativ guter Zusammenhalt der keramischen Pulverteilchen vor dem Sintervorgang sichergestellt wird, was aber mit schlechteren Eigenschaften der fertigen Sinterkörper erkauft werden muß.

Mit Wasser und/oder anorganischen Zusätzen werden hingegen nur relativ geringe Dichten der Grünkörper erreicht, sodaß diese nicht genügend standfest sind, um vor dem eigentlichen Sintervorgang mechanisch bearbeitet zu werden.

Da die Verarbeitung keramischer Massen auf Wasserbasis aus wirtschaftlichen und Umweltschutzgründen einer Verarbeitung auf Basis organischer Zusätze vorzuziehen ist und außerdem störende Einflüsse auf die Eigenschaften der fertigen Sinterkörper vermieden werden sollen, stellt sich die Aufgabe, ein Verfahren zur Herstellung von Grünkörpern durch Formgebung nach dem Schlickerguß-, Spritzguß- oder Strangpreßverfahren aus sinterfähigen keramischen Massen auf Basis von Siliciumnitrid, gegebenenfalls Aluminiumnitrid und/oder Aluminiumoxid und andere Oxide als Sinterhilfsmittel enthaltenden Ausgangspulvergemischen und Wasser enthaltenden Dispersions- und Bindemitteln zur Verfügung zu stellen, das nicht nur ausreichende Standfestigkeit für mechanische Bearbeitung und relativ hohe Dichte der Grünkörper, sondern auch einen störungsfreien Sintervorgang unter Erzeugung homogener, polykristalliner Sinterkörper mit hohen Enddichten garantiert.

Diese Aufgabe wird erfindungsgemäß dadurch gelöst, daß ein Magnesiumchlorid-Hydrat im Gemisch mit Magnesiumoxid und Wasser als Dispersions- und Bindemittel verwendet wird, und die Massen nach der Formgebung bei Temperaturen im Bereich von 30° bis 60°C ausgehärtet werden.

MgCl$_2$ bildet mit Wasser mehrere Hydrate, von welchen die Existenz von 5 Hydraten mit 2, 4, 6, 8 und 12 H$_2$O literaturbekannt ist. Handelsprodukt ist üblicherweise das Hexahydrat, das bei einer Temperatur von über 100°C in das Tetrahydrat umgewandelt wird. Es ist ferner bekannt, daß MgCl$_2$-Lösungen mit MgO eine Reihe basischer Chloride (Magnesiumoxichloride) bilden, die technische Bedeutung als sogenannter Magnesia-Binder haben, die an der Luft aushärten, aber nicht wasserbeständig sind.

Für den erfindungsgemäßen Verwendungszweck werden vorzugsweise MgCl$_2$.6H$_2$O und MgO im Molverhältnis von etwa 1 bis 2 : 1 bis 3 eingesetzt. Die erforderliche Wassermenge richtet sich danach, ob die keramischen Massen nach dem Schlickerguß- oder nach dem Spritzguß- bzw. Strangpreßverfahren verarbeitet werden sollen, das heißt, die Wassermenge wird jeweils so bemessen, daß sie zur Herstellung von gieß- oder knetfähigen Massen ausreichend ist.

Für die Herstellung der erfindungsgemäß zu verarbeitenden keramischen Massen werden vorteilhaft feinteilige Si$_3$N$_4$-Pulver mit Teilchengrößen von 2 μm und feiner eingesetzt. Als Maß für die Teilchengröße kann die spezifische Oberfläche, gemessen nach BET, herangezogen werden. Pulver mit einer spezifischen Oberfläche im Bereich von 4 - 10 m$^2$/g haben sich dabei besonders bewährt. Zusätzlich werden Sinterhilfsmittel mitverwendet, welche die Verdichtung der Grünkörper nach der Formgebung bei der anschließenden Sinterung unterstützen und die aus der Gruppe der Oxide von Al, Si, Y, Zr, Hf, der Lanthaniden und Gemischen hiervon ausgewählt sind. Besonders bewährt haben sich hierbei Lanthanaluminate, die aus La$_2$O$_3$ und Al$_2$O$_3$ hergestellt worden sind. Die Menge der Sinterhilfsmittel kann üblicherweise etwa 1 bis 25 Gew.-%, vorzugsweise etwa 1 bis 5 Gew.-%, jeweils bezogen auf das Gesamtgewicht der Pulvermischung, betragen.

Außer dem Si$_3$N$_4$-Ausgangspulver können auch Pulver auf Aluminiumnitrid- und/oder Aluminiumoxidbasis mitverwendet werden, die dann zusammen mit den genannten Sinterhilfsmitteln als Endprodukte die bekannten Sialone liefern, in welchen Si- und N-Atome teilweise durch Al- und O-Atome ersetzt sind. Keramische Ausgangspulver und Sinterhilfsmittel sollten dabei etwa die gleichen Teilchengrößen wie das Siliciumnitridpulver haben.

Es ist ferner möglich, Füllstoffe in Form von keramischen Fasern mitzuverwenden, die üblicherweise als Whisker eingesetzt werden, worunter Haarkristalle mit Streckungsgraden 1 : 10 bis 1 : 100 zu verstehen

3

sind. Beispiele für keramische Fasern sind solche aus SiC, $SiO_2$, $Al_2O_3$, $ZrO_2$, BN und $Si_3N_4$, wobei SiC-Fasern bevorzugt sind. Mit Whisker-Gehalten bis zu etwa 40 Gew.-%, bezogen auf das Trockengewicht der keramischen Masse wird dabei die Standfestigkeit der Grünkörper nicht störend beeinflußt.

Zur Herstellung der gieß- bzw. knetfähigen keramischen Massen werden die Feststoffe zusammen mit der jeweils erforderlichen Wassermenge durch übliche bekannte Maßnahmen verarbeitet, beispielsweise durch Verrühren in Misch- und Mahlaggregaten. Während der Aufmahlung von Siliciumnitridpulver in Wasser stellt sich ein pH-Wert von etwa 9,8 ein. Bei dieser Basizität löst sich $MgCl_2 . 6H_2O$ auf und fällt als Magnesiumhydroxid $Mg(OH)_2$ aus, wodurch die Wirksamkeit des Binders verloren geht. Durch Zugabe von Säure oder geeigneten Pufferlösungen in an sich bekannter Weise wird daher der pH-Wert des Schlickers auf Werte von < 9.5, vorzugsweise < 9.0 und insbesondere 8.5 eingestellt. Durch diese Maßnahme bleibt die Wirksamkeit des Chloridbinders erhalten. Für die Herstellung einer Schlickergießmasse kann der erfindungsgemäße Zusatz aus $MgCl_2$.Hydrat + MgO von Anfang an mit eingemischt werden, während es bei der Herstellung einer Spritzgieß- oder Strangpreßmasse vorteilhaft ist, den erfindungsgemäßen Zusatz der eigentlichen Knetmasse erst unmittelbar vor der Verarbeitung zuzugeben.

Die Menge des erfindungsgemäßen Zusatzes aus $MgCl_2$-Hydrat + MgO wird dabei vorteilhaft so bemessen, daß im fertigen Sinterkörper ein Oxidgehalt, der aus den Sinterhilfsmitteln und dem Zusatz stammt, von etwa 30 Gew.-% nicht überschritten wird, vorzugsweise liegt dieser Oxidgehalt im Bereich von etwa 10 - 15 Gew.%, jeweils bezogen auf das Gesamtgewicht.

Nachdem die Gieß- oder Knetmassen in die gewünschte Form gebracht worden sind, werden die Grünkörper bei leicht erhöhten Temperaturen, die vorteilhaft zwischen 40° und 50° C liegen, ausgehärtet.

Bei dem Aushärtvorgang werden vermutlich die als Magnesia-Binder bekannten Gemische aus Magnesiumoxichloriden gebildet, wobei angenommen wird, daß der Anwesenheit von Siliciumnitrid oder dessen Mischkristallen eine reaktionsbeschleunigende Wirkung zukommt, sodaß der Aushärtvorgang im angegebenen Temperaturbereich praktisch innerhalb von 4 bis 5 Stunden beendet ist.

Die mit Hilfe des erfindungsgemäßen Zusatzes durch Formgebung erzeugten Grünkörper, worunter üblicherweise Formteile mit offener Porosität, das heißt mit zur Oberfläche offenen Poren zu verstehen sind, haben eine Gründichte von mindestens 55 %, vorzugsweise von mindestens 65 % TD, das heißt der theoretisch möglichen Dichte. Die Grünkörper sind von guter Qualität, das heißt sie sind feinporig mit gleichmäßiger Feststoffverteilung. Während des Aushärtens ist keine Rißbildung und auch kein Ansatz zur Rißbildung erkennbar.

Die Grünkörper haben eine ausreichende Standfestigkeit und können nach dem Aushärten mechanisch bearbeitet werden. Zur Verbesserung der Lagerbeständigkeit können die Grünkörper anschließend, das heißt noch vor der eigentlichen Sinterung, einem Glühprozess bei Temperaturen im Bereich von 400° bis 800° C, vorzugsweise bei etwa 600° C unterzogen werden. Es wird angenommen, daß unter diesen Bedingungen die Magnesiumoxichloridbindungen bereits teilweise in Magnesiumoxidbindungen umgewandelt werden, ein Vorgang, der dann beim eigentlichen Sintervorgang praktisch vollständig verläuft.

Durch orientierende Sinterversuche unter üblichen bekannten Bedingungen (1750° bis 1900° C, $N_2$-Atmosphäre) wurde festgestellt, daß diese Grünkörper unter Bildung von polykristallinen Formkörpern auf Siliciumnitridbasis mit einer theoretischen Dichte von mindestens 98 % TD verdichtet werden können.

Die mit dem erfindungsgemäßen Zusatz herstellbaren keramischen Gießmassen können auch in Schlickerdruckgußmaschinen verwendet werden, in welchen anstelle der Gipsformen poröse, kunststoffbeschichtete Metallformen verwendet werden. Diese Methode eignet sich besonders zur wirtschaftlichen Herstellung kompliziert geformter Hohlkeramikteile.

Beispiel 1:

Zur Herstellung eines Tiegels durch Schlickerguß wurde folgender Ansatz verwendet:

| | |
|---|---|
| $Si_3N_4$ | 87,7 Gew.-% |
| $LaAlO_3$ | 4,0 Gew.-% |
| MgO | 4,5 Gew.-% |
| $MgCl_2 \times 6H_2O$ | 3,8 Gew.-% |

Zusammen mit der 1,5-fachen Wassermenge (bezogen auf die Masse der trockenen Pulver) und Einstellen des pH-Wertes auf 8.5 wurde der Ansatz in einem Misch-und Mahlaggregat homogenisiert. Die entstehende Suspension wurde entgast, um Gießfehler durch eingeschlossene Luftblasen zu vermeiden. Anschließend wurde der Schlicker in die entprechende Gipsform gegossen und, nachdem sich die gewünschte Scherbenstärke eingestellt hatte, wurde die überschüssige Suspension in das Vorratsgefäß zurückgegossen. Nach dem Abschwinden des Formteils von der Gipsform wurde dieses entnommen und im Trockenschrank bei ca. 50 °C innerhalb von 4 bis 6 Stunden ausgehärtet. Die Festigkeit und Bearbeitbarkeit des Scherbens war mit derjenigen des kompakten Specksteins zu vergleichen.

Der Tiegel wurde auf einer Drehmaschine nachbearbeitet und ein zum Ausgießen günstiger Rand sowie eine standsichere Bodenfläche angearbeitet.

Zur Verbesserung der Lagerfähigkeit wurde der Tiegel bei 600 °C zwei Stunden lang geglüht.

Durch orientierende Sinterversuche unter den für Siliciumnitrid üblichen Bedingungen bei 1700-1900 °C in Stickstoffatmosphäre wurden aus derart hergestellten Tiegeln dichtgesinterte Endprodukte erhalten mit Dichten von 3,17-3,24 g/cm$^3$.

Beispiel 2:

Zum Strangpressen von whiskerverstärktem keramischem Material wurde folgender Ansatz verwendet:

| | |
|---|---|
| $Si_3N_4$ | 87,2 Gew.-% |
| $Al_2O_3$ | 2,1 Gew.-% |
| AlN-Polytype 15 R | 2,3 Gew.-% |
| $LaAlO_3$ | 3,7 Gew.-% |
| MgO | 4,7 Gew.-% |

Zusammen mit der zweifachen Wassermenge (bezogen auf die Masse der trockenen Pulver) wurde diese Mischung in einem Misch und Mahlaggregat homogenisiert und auf eine zum Sintern günstige Partikelgröße zerkleinert.

Kurz vor dem Abschluß der Mahlbehandlung wurden noch 20 Vol.% SiC-Whisker (bezogen auf das Volumen der trockenen Pulver) zugegeben und diese homogen in der Masse verteilt, ohne sie merklich zu zerkleinern. Anschließend wurde die Masse getrocknet, entagglomeriert und abgesiebt.

Die eigentliche Strangpressmasse wurde unmittelbar vor der Verarbeitung durch Zugabe von 3,8 Gew.-% $MgCl_2$ x 6 $H_2O$ (bezogen auf die Masse der getrockneten Mischung) und durch Zugabe von 25% destilliertem Wasser (bezogen auf die gesamte Pulvermenge) in einem Kneter hergestellt. Die steife Masse wurde anschließend zu dünnwandigen Rohren stranggepreßt. Nach Aushärtung der Rohre bei 40 °C erfolgte die mechanische Bearbeitung durch Überdrehen und Ablängen auf die gewünschten Abmessungen.

Der Ausglüh- und Sinterprozeß wurde unter gleichen Bedingungen wie in Beispiel 1 beschrieben, durchgeführt. Aus den bearbeiteten Grünteilen wurden maßhaltige Sinterkörper mit Enddichten > 98% theoretischer Dichte erhalten.

Beispiel 3:

Zur Herstellung von Stangen aus einem -Sialonwerkstoff durch Strangpressen wurde folgender Ansatz verwendet:

| | |
|---|---|
| $Si_3N_4$ | 65,0 Gew.-% |
| $Y_2O_3$ | 9,3 Gew.-% |
| AlN-Polytype 27 R | 21,0 Gew.-% |
| MgO | 4,7 Gew.-% |

Zusammen mit der zweifachen Wassermenge (bezogen auf die Masse der trockenen Pulver) wurde der Ansatz in einem Misch-und Mahlaggregat homogenisiert und auf eine zum Sintern günstige Partikelgröße aufgemahlen. Die Masse wurde anschließend getrocknet, entagglomeriert und abgesiebt.

Die eigentliche Strangpreßmasse wurde unmittelbar vor der Verarbeitung durch Zugabe von 3,8 Gew.-%

MgCl$_2$ x6H$_2$O (bezogen auf die Masse des trockenen Pulvers) und durch Zugabe von 25% destilliertem Wasser (bezogen auf die gesamte Pulvermenge) in einem Kneter hergestellt. Die steife Masse wurde anschließend zu Stangen mit 16 mm Durchmesser gepreßt. Mit einem Messer wurden die Stangen auf ein gut handhabbares Maß (120 mm) abgeschnitten und bei 40 °C ausgehärtet.

Aus den runden Stangen wurden auf einer Fräsmaschine rechteckige Profile mit den Maßen 8 x 11 x 50 mm$^3$ hergestellt. Die 4-Punkt-Biegebruchfestigkeit dieser Grünkörper wurde zu 10 MPa bestimmt. Bei der anschließenden Sinterung (1790 °C, Stickstoffatmosphäre) wurde eine Sinterdichte von 98,7% theoretischer Dichte erreicht.

Beispiel 4 (Vergleichsbeispiel):

Der Pulveransatz und die Aufbereitung wurde unter gleichen Bedingungen wie in Beispiel 3 durchgeführt, mit der Abänderung, daß bei der Aufbereitung im Kneter kein Magnesiumchlorid (MgCl$_2$ x 6 H$_2$O) zugegeben wurde. Beim Pressen der Masse ergaben sich durch die Brüchigkeit des Produktes Probleme bei der Handhabung, die zu einem hohen Anteil an Ausschuß führten.

Obwohl die Wärmebehandlungsschritte in gleicher Weise durchgeführt wurden, blieb die Festigkeit des Materials gering. Die Bearbeitung auf der Fräsmaschine war nicht möglich, da die geringe Festigkeit des Materials ein Einspannen nicht zuließ. Trotzdem wurden einige unbearbeitete Bruchstücke dem Sinterprozeß unterzogen. Dabei ergab sich unter gleichen Bedingungen eine Dichte von 98,8% theoretischer Dichte. Die festigkeitssteigernden Zusätze haben demnach keinen sinterhemmenden Einfluß auf das keramische Material.

**Ansprüche**

1. Verfahren zur Herstellung von Grünkörpern durch Formgebung nach dem Schlickerguß-, Spritzguß- oder Strangpreßverfahren aus sinterfähigen keramischen Massen auf Basis von Siliciumnitrid, gegebenenfalls Aluminiumnitrid und/oder Aluminiumoxid und andere Oxide als Sinterhilfsmittel enthaltenden Ausgangspulvergemischen und Wasser enthaltenden Dispersions- und Bindemitteln, dadurch gekennzeichnet, daß ein Magnesiumchlorid-Hydrat im Gemisch mit Magnesiumoxid und Wasser als Dispersions- und Bindemittel verwendet wird und die Massen nach der Formgebung bei Temperaturen im Bereich von 30° bis 60° C ausgehärtet werden.

2. Verfahren nach Anspruch 1, dadurch gekennzeichnet, daß als Dispersions- und Bindemittel ein Gemisch aus Magnesiumchlorid-Hexahydrat und Magnesiumoxid im Molverhältnis von 1 bis 2 : 1 bis 3 verwendet wird.

3. Verfahren nach Anspruch 1, dadurch gekennzeichnet, daß der pH-Wert der Schlickergußmasse auf Werte von < 9.5 eingestellt wird.

4. Verfahren nach Anspruch 1, dadurch gekennzeichnet, daß die Massen nach der Formgebung bei 40° bis 50° C ausgehärtet werden.

5. Verfahren nach Anspruch 1, dadurch gekennzeichnet, daß für die sinterfähigen keramischen Massen Ausgangspulvergemische aus Si$_3$N$_4$ oder aus Si$_3$N$_4$, AlN und Al$_2$O$_3$, je weils im Gemisch mit bis zu 25 Gew.-%, bezogen auf das Gesamtgewicht der Pulvermischung an Sinterhilfsmitteln, ausgewählt aus der Gruppe der Oxide von Al, Si, Y, Zr, Hf, der Lanthaniden und Gemischen hiervon, verwendet werden.

6. Verfahren nach Anspruch 5, dadurch gekennzeichnet, daß in den Ausgangspulvergemischen keramische Fasern als Füllstoffe, ausgewählt aus der Gruppe der Fasern von SiC, SiO$_2$, Al$_2$O$_3$, ZrO$_2$, BN und Si$_3$N$_4$ in Mengen bis zu 40 Gew.-%, bezogen auf das Trockengewicht der keramischen Masse, mitverwendet werden.

7. Verfahren nach Anspruch 1, dadurch gekennzeichnet, daß die Grünkörper nach der Aushärtung einem Glühprozeß bei Temperaturen im Bereich von 400° bis 800° C unterzogen werden.